# EUROPEAN PATENT SPECIFICATION

(11) **EP 0 655 819 B1**
(45) Date of publication and mention of the grant of the patent: **29.01.1997**
(21) Application number: 94116866.8
(22) Date of filing: 26.10.1994
(51) Int. Cl.: H02G 9/04, B66C 13/12

(54) **Cover belt for a duct**
Band zum Abdecken eines Kanals
Ruban de recouvrement pour un conduit

(30) Priority: 19.11.1993 LU 88427
(43) Date of publication of application: 31.05.1995
(73) Proprietor: IPALCO B.V., 2952 BB Alblasserdam (NL)
(72) Inventor: Hellman, Lars, S-114 59 Stockholm (SE)
(74) Representative: Freylinger, Ernest T.

(56) References cited:
- EP-A- 0 107 125
- DE-U- 7 609 800
- FR-A- 2 449 991
- FR-A- 2 606 781

## Description

The invention relates to a cover belt for a duct, made of a flexibly deformable material with metallic reinforcements. More particularly, it relates to a cover belt for a duct receiving electric cables or busbars for the power supply of a movable current consumer, for example a transporter bridge or quayside crane, which can be swung up from a closed position by a deflecting device on the movable current consumer and falls back in its closed position behind this deflecting device.

The traditional method of feeding electrical power to quayside cranes through contact rails has now virtually been superseded by cable systems. However it is still necessary to provide protection for the cable from quay traffic. Furthermore, safety regulations in many ports require some form of housing. The simplest and most economic method is to provide an open duct, although this is hazard to pedestrians and can easily become clogged by debris, possibly damaging the cable. A more sophisticated solution is to cover the duct with hinged metal plates. This system however, suffers many drawbacks since maintenance requirements are considerable. Moreover, the complex design of the plate lifting mechanism slows transit speed of the crane.

A semi-flexible cover belt is known from DE-A-3005454. A deflecting device on the current consumer produces local opening of the semi-flexible cover belt during movement of the current consumer, by twisting the belt by means of deflecting elements on the deflecting device. Behind the deflecting device the belt is again closed by resilient deformation and its dead weight. A device of this type thus permits unhindered winding and unwinding of an electric cable laid in the duct or, in the case of busbars, unhindered introduction of a current collector into the duct. At the same time the continuous cover belt ensures excellent protection of the cable and/or busbar in the duct, both against the effects of weather and against fouling. In addition unhindered movement of vehicles over the duct is always ensured.

The belt disclosed in DE-A-3005454 consists of a flexibly deformable rubber material in which metallic reinforcements are embedded. It comprises a securing strip, a joint strip and a cover strip. The securing strip is secured along a first longitudinal edge of the duct. The joint strip flexibly connects the securing strip to the cover strip. The cover strip spans the duct and rests on both sides of the latter.

It is clear that the design of the reinforcement of the cover belt is a particularly important feature for the function of this belt. In a cover belt according to DE-A-3005454 this reinforcement consists of three different layers of metallic reinforcements embedded in the flexibly deformable rubber material. A first layer consists of stranded steel wires near the underside of the belt. These first stranded steel wires run parallel to and across the longitudinal direction of the cover belt over the full width of the cover belt. A second layer likewise consists of stranded steel wires running parallel to and across the longitudinal direction of the cover belt. These second stranded steel wires are arranged exclusively near the topside of the cover strip. A third layer consists of a semi-rigid reinforcement which is provided in the cover strip between the first and second reinforcement.

Excellent results have been achieved with this special reinforcement in practice. The cover strip spanning the duct is dimensionally stable in the transverse direction and always returns to its flat position when closed after twisting during opening, so that its free edge lies flat in a recess at the edge of the duct and is thus protected from traffic passing over the duct. In the longitudinal direction the cover belt is flexible enough to allow it to be twisted when opened, but at the same time is sufficiently dimensionally stable to prevent undulating longitudinal deformation of the cover belt. In the area of the joint strip the first reinforcing layer ensures the required flexibility and at the same time strength to prevent fractures of the cover belt in this heavily stressed area. The high rigidity achieved by the second and third reinforcing layers, which are arranged exclusively in the area of the cover strip, permits easy support of vehicular traffic and prevents sagging of the cover belt in the area of the cover strip during opening. There is thus no risk that the cover belt could slip off the deflecting device as a result of transverse deformation of the cover strip.

A disadvantage of the otherwise excellent cover belt disclosed in DE-A-3005454 is that tears occur in the securing strip, particularly when the belt is exposed to extreme loads due to heavy traffic.

An attempt was made to strengthen the reinforcing strip of the cover belt according to DE-A-3005454 by additional metallic reinforcements. Apart from the fact that the existing material thickness of the cover belt in the area of the reinforcing strip allows very little free space for embedding further metallic reinforcements, it emerged that these additional metallic reinforcements have a negative effect on the dimensional stability of the cover belt. In the closed position the cover strip was no longer in the required flat position. Attempts to strengthen the securing strip by textile reinforcements produced similar negative results in respect of the flat position of the cover belt.

The basic problem underlying the present invention is to provide a reinforced cover belt which has a securing strip which is less sensitive to tearing and which shows nevertheless the same advantages as described above in connection with the cover belt disclosed in DE-A-3005454.

According to the present invention this problem is solved by incorporation of at least one belt-shaped textile reinforcement layer, with essentially the same overall width as the cover belt, in the flexibly deformable material in the area of the neutral plane of the cover belt, and by simultaneously arranging first oblong metallic reinforcement elements between the underside of the cover belt and the textile reinforcement, wherein these first oblong metallic reinforcement elements extend essentially at right angles to the longitudinal direction over the full width of the cover belt.

In the cover belt according to the invention the securing strip is strengthened by textile reinforcements. The required flat position of the cover belt is however not further impaired by the textile reinforcements, because the belt-shaped textile reinforcements have essentially the same width as the cover belt and are arranged in the area of the neutral plane of the cover belt (i.e. in the area of the stress-free plane which divides the cover belt into a top and a bottom half; tensile stresses prevailing in the bottom half and compressive stresses in the top half when the topside of the cover strip is charged). Furthermore, an advantageous interaction between textile reinforcements and the first metallic reinforcement first oblong metallic reinforcement elements occurs in the cover belt according to the invention. These elements extend essentially at right angles to the longitudinal direction over the full width of the cover belt and ensure the flat position of the cover belt as well as its necessary rigidity and flexibility. Textile reinforcements alone would not provide a satisfactory solution. Cover belts with textile reinforcements which do not have the first metallic reinforcing elements are deformed with time, particularly in warmer climatic zones, and therefore form longitudinal undulations. Consequently the free unsecured edge of the cover belt projects from the recess in the duct edge and the cover belt is for example exposed to the risk that a vehicle wheel will catch in the projecting edge and tear the cover belt.

It is important to emphasize that the task of the first metallic reinforcing elements according to the invention is essentially to increase the rigidity of the cover belt at right angles to the longitudinal direction and to ensure that after twisting by the deflecting device or after deformation by a vertical load above the duct the cover belt again assumes its flat position. By contrast the textile reinforcement according to the invention essentially increases the tearing strength of the belt, particularly in the transverse direction. In other words the textile reinforcement according to the invention contributes to the absorption of shear and tensile stresses in the cover belt. Both reinforcements thus advantageously complement each other.

The risk of tearing the cover belt is greatly reduced particularly in the area of the securing strip by the advantageous interaction of the first metallic reinforcing elements according to the invention and the textile reinforcements according to the invention. The metallic reinforcing elements form anchoring points for securing elements traversing the cover belt. By contrast the textile reinforcements according to the invention prevent the particularly high tensile and shear stresses in this area leading to tears in the flexibly deformable material.

Tests on the cover belt according to the invention have revealed that the function of the joint strip is impaired only insignificantly by the special arrangement of the textile reinforcement and the metallic reinforcement. In other words, the loss of flexibility of the joint strip as a result of the textile reinforcement traversing it surprisingly does not have a negative effect on the function of the cover belt. In the area of the cover strip the textile reinforcement according to the invention even contributes advantageously to greater dimensional stability as a result of its arrangement in the area of the neutral plane.

In an advantageous configuration of the cover belt at least one textile reinforcement overlaps the ends of the first metallic reinforcing elements. Consequently the risk of damage to the flexibly deformable material is greatly reduced by the ends of the metallic reinforcements. Such cases of local damage to the flexibly deformable material could be starting points for propagation of tears in the base material.

In the area of the cover strip the cover belt advantageously has second oblong metallic reinforcing elements, which are arranged between the surface of the cover belt and the textile reinforcements and essentially extend at right angles to the longitudinal direction over the full width of the cover strip. The rigidity of the cover strip is further increased in this way without impairment of the flexibility and elasticity of the joint strip. In addition the flat position of the cover strip is likewise improved.

In the area of the securing strip the cover belt advantageously has a longitudinal groove to receive a securing bar on its top side. This longitudinal groove essentially extends as far as the upper textile reinforcement in the flexibly deformable material. The contact pressure of the securing bar is thus transmitted directly to the upper textile reinforcement, which in turn has a favorable effect on the prevention of tears in this area.

A preferred embodiment of the invention is explained by way of example and in an unrestrictive manner with the aid of the annexed drawings.
- Fig. 1 shows a perspective view of a duct with a cover belt according to the invention and a deflecting device for the cover belt.
- Fig. 2 shows a cross-section through the duct with a cover belt as in Fig. 1 (the deflecting device is not shown).
- Fig. 3 shows a cross-section on an enlarged scale through a cover belt according to the invention.

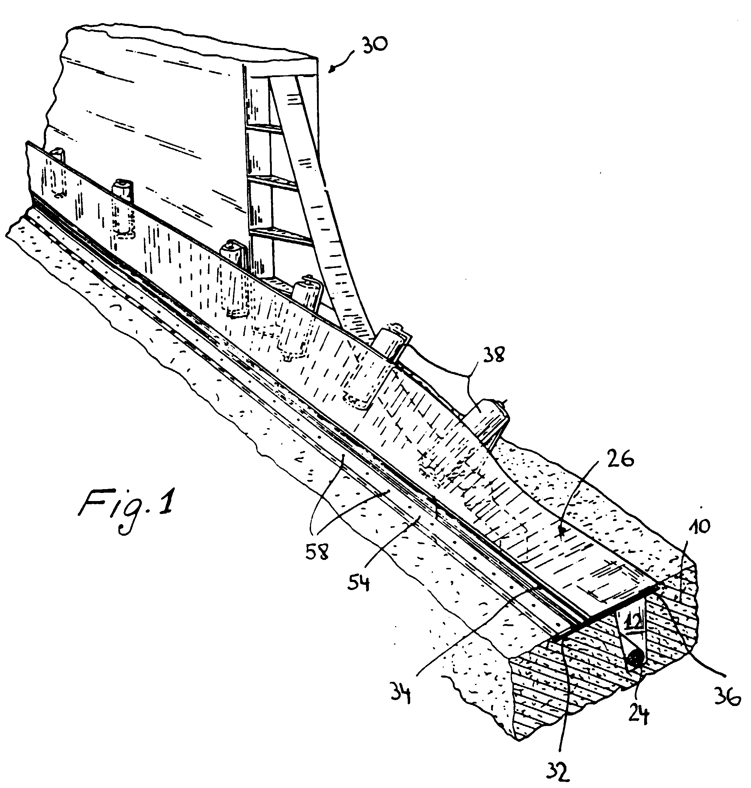

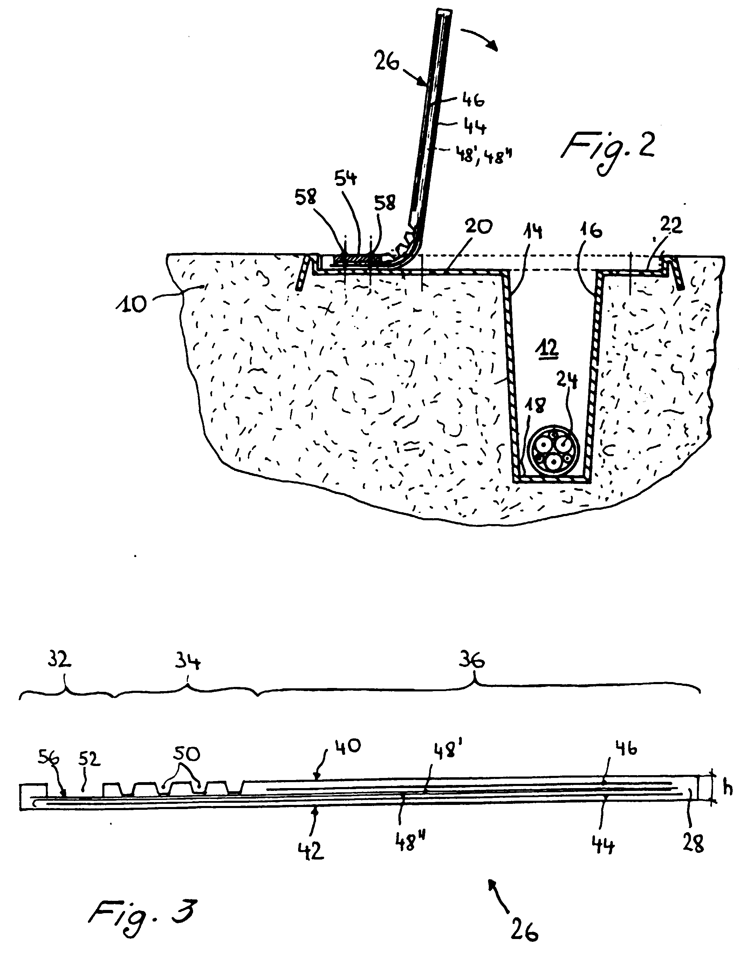

Fig. 2 shows a cross-section through a U-shaped duct 12 in the ground 10. The duct 12 has two opposite, essentially vertical side walls 14 and 16 and a bottom 18. A recess 20, 22 is provided along each of the two longitudinal edges of the duct 12 for receiving a cover belt 26. The reference number 24 denotes an electric cable in the duct 12.

Fig. 1 shows a deflecting device 30, which is movable in the longitudinal direction of the duct 12 and opens the cover belt 26 locally by twisting. Such a deflecting device can be mounted, for example, on a transporter bridge or a quayside crane. The local opening of the cover belt 26 in the area of the deflecting device 30 provides unrestricted access to the duct 12 in this local area, whereas the remainder of the duct 12 continues to be protected by the cover belt 26 in the closed position.

The cover belt 26 itself consists of a belt made of a flexibly deformable material 28, for example rubber. This belt, which is essentially wider than the opening in the duct 12, can be functionally subdivided into three sections or strips across its width (see Fig. 3). A securing strip 32 along the first longitudinal edge of the belt serves to secure one side of the cover belt in the recess 20 alongside the duct 12. A joint strip 34 adjoins the securing strip 32 and connects the latter to a cover strip 36.

In the closed position the joint strip 34 and a large part of the cover strip 36 lie flat on the recess 20. The remaining part of the cover strip 36 spans the opening of the duct 12 and rests flat on the surface of the recess 22 on the other side (see also Fig. 1). The cover belt 26 is opened from its closed position by continuous twisting until the cover strip 36 is virtually vertical, as shown in Figure 1. This twisting of the cover belt 26 is achieved through rolls 38 on the deflecting device 30. The cover belt is returned into its closed position behind the deflecting device 30 by flexible deformation and by the dead weight of the cover belt 26. It should be pointed out that the front part of the deflecting device 30 with the inclined rolls 38 can be dispensed with for better access to the duct 12. The cover belt 26 is then supported exclusively by the rear almost vertical rolls.

Further design features of the cover belt according to the invention are explained in more detail with reference to Figure 3. The cover belt 26 has a material thickness "h" between its top side 40 and underside 42, which is slightly smaller than the depth of the recesses 20 and 22 at the duct edge, so that the cover belt 26 is slightly countersunk in relation to the ground surface. Several reinforcing layers are embedded in the flexibly deformable material 28 so as to overlap each other.

A first reinforcing layer consists of oblong metallic reinforcing elements 44, which are embedded in the flexibly deformable material 28 in the area of the underside 42. These first metallic reinforcing elements 44 (e.g. stranded steel wires) extend at right angles to the longitudinal direction of the cover belt over the full width of the cover belt, so that they are supported on both sides by the duct 12 when the cover belt is in the closed position. Their task is to impart the necessary dimensional stability, rigidity and also elasticity to the cover belt, so that:
(1) the cover belt is as flat as possible in the closed position;
(2) after twisting during opening, the cover belt 26 returns to its flat closed position,
(3) with vertical loading of the cover strip 36 above the duct, the cover belt is not greatly deformed, and
(4) this deformation is largely reversible.

The distance between the individual first metallic reinforcing elements 44, their thickness, their flexible properties, etc. should, of course, be determined by the person skilled in the art as a function of the predetermined load and the dimensions of the cover belt.

A second reinforcing layer consists of oblong, metallic reinforcing elements 46 (e.g. stranded steel wires), which are integrated in the flexibly deformable material in the area of the top side 40 of the cover strip 36. These second metallic reinforcing elements 46 likewise extend at right angles to the longitudinal direction of the cover belt 26, but only over the width of the cover strip 36 and do not engage in the joint strip 34. The task of this second reinforcing layer 46 is primarily to increase the rigidity and dimensional stability of the cover strip 36, without impairing the flexibility of the joint strip 34.

To increase the tearing strength of the securing strip, i.e. to make the securing strip more resistant to tensile and shear stresses, the cover belt 26 also has two textile reinforcement layers 48' and 48''. The latter each form a belt with approximately the same width as the cover belt 26 and are arranged one above the other in the area of the neutral plane of the cover belt 26. The textile reinforcements may, for example, be fabric reinforcements made of low-extension polyester fibers in the longitudinal direction and more extensible polyamide fibers in the transverse direction. The bottom textile reinforcement 48'' advantageously overlaps the ends of the first metallic reinforcing elements 44 in the area of the securing strip 32, in order to protect the flexibly deformable material 28 against damage by these usually sharp-edged ends of the reinforcing elements 44.

The joint strip 34 has several recesses 50 on the top side 40, which run parallel to each other in the longitudinal direction of the cover belt and facilitate the twisting and bending of the joint strip. The cross-section of these recesses is advantageously trapezoidal. The depth of the recesses is preferably adapted in such a way to the position of the upper textile reinforcement 48' that the continuity of the flexibly deformable material 28 above this upper textile reinforcement 48' remains unaffected.

The securing strip 32 preferably has a recess 52 for a securing bar 54 on the top side 40. The depth of this recess 52 is selected in such a way that the securing bar 54 transmits the contact pressure essentially directly to the top side 56 of the upper textile reinforcement 48'. The required contact pressure of the securing bar 54 is achieved by securing elements 58 (e.g. screws or preferably blind rivets), which traverse the cover belt at right angles in the area of the recess 52. These securing elements 58 additionally form anchoring points for the first reinforcing elements 44 of the cover belt 26.

Initial tests have demonstrated that the described cover belt 26 has functional properties at least as good as the cover belt from DE-PS-3005454, but is substantially more wear-resistant than the latter. So far no tears have been detected in the securing strip in the tests.

## Claims

1. Cover belt for a duct (12) of a flexibly deformable material (28) with metallic reinforcements (44, 46), which can be swung up from a closed position by a deflecting device (30) movable in the longitudinal direction of the duct (12) and falls back in its closed position behind the deflecting device (30), the cover belt (26) having a securing strip (32), a joint strip (34) and a cover strip (36), the securing strip (32) being secured along the first longitudinal edge of the duct (12), the joint strip (34) connecting the securing strip (32) flexibly to the cover strip (36) and the cover strip (36) spanning the duct (12) and being supported on both sides of the duct (12),
**characterized in that**
at least one textile reinforcement layer (48', 48'') with essentially the same overall width as the cover belt (26) is embedded in the flexibly deformable material (28) in the area of the neutral plane of the cover belt (26), wherein first oblong elements (44) of the metallic reinforcement are arranged between the underside (42) of the cover belt (26) and the textile reinforcements (48', 48'') so as to extend essentially at right angles to the longitudinal direction over the full width of the cover belt (26).

2. Cover belt according to claim 1, characterized in that at least one textile reinforcement layers (48'') overlaps the ends of the first metallic reinforcing elements (44) in the securing strip (32).

3. Cover belt according to claim 1 or 2, characterized by second oblong elements (46) of the metallic reinforcement, which are arranged between the top side (40) of the cover belt (26) and the textile reinforcements (48', 48'') and extend essentially at right angles to the longitudinal direction of the cover belt (26) over the full width of the cover strip (36) to the joint strip (34).

4. Cover belt according to one of claims 1 to 3, characterized by a recess (52) to receive a securing bar (54) in the area of the securing strip (32), this recess (52) extending as far as the top textile reinforcement (48'') in the flexibly deformable material (28).

5. Cover belt according to any one of claims 1 to 4, characterized by recesses (50) in the flexibly deformable material (28) in the joint strip (34) above the top textile reinforcement layer (48''), wherein the depth of these recesses (50) in the joint strip (34) is limited so that the continuity of the flexibly deformable material (28) above the top textile reinforcement (48'') is not interrupted.

## Patentansprüche

1. Abdeckband für einen Kanal (12) bestehend aus einem elastisch verformbaren Werkstoff (28), mit metallischen Verstärkungen (44, 46), welches aus einer Schließlage mittels einer in Längsrichtung des Bodenkanals (12) beweglichen Ablenkvorrichtung (30) ausgeschwenkt wird und hinter der Ablenkvorrichtung in diese Schließlage zurückfällt, wobei das Abdeckband einen Befestigungsstreifen (32), einen Verbindungsstreifen (34) und einen Abdeckstreifen (36) aufweist, der Befestigungsstreifen längs der ersten Längsseite des Bodenkanals angebracht wird, der Verbindungsstreifen (34) den Befestigungsstreifen (32) elastisch mit dem Abdeckstreifen (36) verbindet, der Abdeckstreifen (36) den Bodenkanal (12) überspannt und auf beiden Seiten des Bodenkanals (12) aufliegt,
**dadurch gekennzeichnet**, daß mindestens eine Textilverstärkungslage (48', 48") mit im wesentlichen der gleichen Gesamtbreite wie das Abdeckband, in den elastisch verformbaren Werkstoff (28) im Bereich der neutralen Ebene des Abdeckbandes (26) eingebettet ist, wobei erste längliche Elemente (44) der metallischen Verstärkungen zwischen der Unterseite (42) des Abdeckbandes (26) und den Textilverstärkungen (48', 48") derart angeordnet sind, daß sie sich im wesentlichen quer zur Längsrichtung über die Gesamtbreite des Abdeckbandes (26) erstrecken.

2. Abdeckband nach Anspruch 1, dadurch gekennzeichnet, daß mindestens eine Textilverstärkungslage (48") die Enden der ersten metallischen Verstärkungselemente (44) im Befestigungsstreifen (32) überlappt.

3. Abdeckband nach Anspruch 1 oder 2, gekennzeichnet durch zweite längliche Elemente (46) der metallischen Verstärkungen, welche zwischen der Oberseite (40) des Abdeckbandes (26) und der Textilverstärkungen (48', 48") angeordnet sind, und sich im wesentlichen quer zur Längsrichtung des Abdeckbandes (26) über die Gesamtbreite des Abdeckstreifens (36) zum Verbindungsstreifen (34) erstrecken.

4. Abdeckband nach einem der Ansprüche 1 bis 3, gekennzeichnet durch eine Vertiefung (52) im Bereich des Befestigungsstreifens (32) zur Aufnahme einer Befestigungsleiste (54), wobei diese Vertiefung (52) sich bis zur obersten Textilverstärkungslage (48") im elastisch verformbaren Werkstoff (28) erstreckt.

5. Abdeckband nach einem der Ansprüche 1 bis 4, gekennzeichnet durch Einbuchtungen (50) im elastisch verformbaren Werkstoff (28) im Verbindungsstreifen (34) oberhalb der oberen Textilverstärkungslage (48"), wobei die Tiefe dieser Einbuchtungen (50) derart begrenzt ist, daß die Kontinuität des elastisch verformbaren Werkstoffs (28) oberhalb der oberen Textilverstärkung (48") nicht unterbrochen ist.

## Revendications

1. Ruban de recouvrement pour un conduit (12) d'un matériau déformable de manière flexible (28) avec renforts métalliques (44, 46), qui peut être basculé vers le haut à partir d'une position fermée par un dispositif d'écartement (30) déplaçable dans la direction longitudinale du conduit (12) et retombe dans sa position fermée derrière le dispositif d'écartement (30), le ruban de recouvrement (26) ayant une bande de fixation (32), une bande de joint (34) et une bande de recouvrement (36), la bande de fixation (32) étant fixée le long du premier bord longitudinal du conduit (12), la bande de joint (34) reliant la bande de fixation (32) de manière flexible à la bande de recouvrement (36) et la bande de recouvrement (36) couvrant le conduit (12) et étant supportée des deux côtés du conduit (12),
caractérisé en ce qu'au moins une couche textile de renfort (48', 48") ayant essentiellement la même largeur totale que le ruban de recouvrement (26) est encastrée dans le matériau déformable de manière flexible (28) dans la zone du plan neutre du ruban de recouvrement (26), les premiers éléments oblongs (44) du renfort métallique étant disposés entre la surface inférieure (42) du ruban de recouvrement (26) et les renforts textiles (48', 48") afin de s'étendre essentiellement perpendiculairement à la direction longitudinale sur la largeur totale du ruban de recouvrement (26).

2. Ruban de recouvrement selon la revendication 1, caractérisé en ce qu'au moins une couche textile de renfort (48") recouvre les extrémités des premiers éléments métalliques de renfort (44) dans la bande de fixation (32).

3. Ruban de recouvrement selon la revendication 1 ou 2, caractérisé par des deuxièmes éléments oblongs (46) du renfort métallique, qui sont disposés entre la face supérieure (40) du ruban de recouvrement (26) et les renforts textiles (48', 48") et s'étendent essentiellement perpendiculairement à la direction longitudinale du ruban de recouvrement (26) sur la largeur totale du ruban de recouvrement (26) jusqu'à la bande de joint (34).

4. Ruban de recouvrement selon l'une quelconque des revendications 1 à 3, caractérisé par un évidement (52) pour recevoir une barre de fixation (54) dans la zone de la bande de fixation (32), cet évidement (52) s'étendant aussi loin que le renfort textile supérieur (48") dans le matériau déformable de manière flexible (28).

5. Ruban de recouvrement selon l'une quelconque des revendications 1 à 4, caractérisé par des évidements (50) dans le matériau déformable de manière flexible (28) dans la bande de joint (34) au-dessus de la couche textile de renfort (48"), dans lequel la profondeur de ces évidements (50) dans la bande de joint (34) est limitée afin que la continuité du matériau déformable de manière flexible (28) au-dessus du renfort textile supérieur (48") ne soit pas interrompue.
